# EUROPÄISCHE PATENTSCHRIFT

(11) **EP 1 455 381 B1**
(45) Veröffentlichungstag und Bekanntmachung des Hinweises auf die Patenterteilung: **11.04.2007**
(21) Anmeldenummer: 04003155.1
(22) Anmeldetag: 12.02.2004
(51) Int. Cl.: H01J 65/04, H01J 61/067

(54) **Entladungslampe für dielektrisch behinderte Entladungen mit überhängenden Entladungselektrodenabschnitten**
Dielectric barrier discharge lamp with overhanging electrode sections
Lampe à décharge à barrière diélectrique avec des sections d'électrode qui s'avancent en surplomb

(30) Priorität: 07.03.2003 DE 10310144
(43) Veröffentlichungstag der Anmeldung: 08.09.2004
(73) Patentinhaber: Patent-Treuhand-Gesellschaft für elektrische Glühlampen mbH, 81543 München (DE)
(72) Erfinder: Hitzschke, Lothar, Dr., 81737 München (DE); Vollkommer, Frank, Dr., 82131 Buchendorf (DE)

(56) Entgegenhaltungen:
- WO-A-00/19487
- WO-A-00/21116
- US-A1- 2002 154 258

## Beschreibung

### Technisches Gebiet

Die vorliegende Erfindung bezieht sich auf für dielektrisch behinderte Entladungen ausgelegte Entladungslampen.

### Stand der Technik

Solche Entladungslampen sind an sich Stand der Technik und bereits in den verschiedensten Einzelheiten in früheren Patentanmeldungen derselben Anmelderin dargestellt worden. Auf die grundlegenden physikalischen und technischen Details solcher Entladungslampen wird hier nicht mehr im Einzelnen eingegangen, sondern stattdessen auf den einschlägigen Stand der Technik verwiesen, in dem diese Lampen auch gelegentlich als stille Entladungslampen bezeichnet werden. Sie eignen sich insbesondere auch für eine gepulste Betriebsweise, bei der sich eine besonders gute Effizienz der Lichterzeugung ergibt.

Insbesondere zeigt die frühere Patentanmeldung DE 198 44 721.3 sowie die zugehörige WO 00/19487 mäandrierende Elektrodenformen, mit denen der Entladungsabstand jeweils nächstbenachbarter streifenförmiger Elektroden in einer solchen Entladungslampe moduliert wird. Dabei sind beispielsweise Sinusformen oder Sägezahnformen dargestellt.

Auch die US 2002/154258 zeigt eine Entladungslampe mit einer Mehrzahl streifenförmiger Elektroden. Die dielektrisch behinderten streifenförmigen Elektroden weisen Entladungselektrodenabschnitte auf, welche dazu ausgelegt sind, dass an ihnen Einzelentladungen brennen.

Die WO 00/19487 zeigt ebenfalls eine Entladungslampe mit einer Mehrzahl dielektrische behinderter streifenförmiger Elektroden. Im Unterschied zu der oben genannten US-Schrift wird hier vor allem auf eine mäandrierende Elektrodenstreifenform abgestellt.

In der WO 00/21116 wird auch eine Entladungslampe mit einer Mehrzahl streifenförmiger Elektroden gezeigt. In diesem Dokument wird vor allem auf einen besonders geringen Entladungsabstand abgestellt.

### Darstellung der Erfindung

Der vorliegenden Erfindung liegt das technische Problem zugrunde, eine Entladungslampe für dielektrisch behinderte Entladungen anzugeben, die ein neue und günstige Elektrodenform zeigt.

Hierzu richtet sich die Erfindung auf eine Entladungslampe mit einem ein Entladungsvolumen begrenzenden Entladungsgefäß und einer Mehrzahl streifenförmiger Elektroden, die zumindest zum Teil durch eine dielektrische Schicht von dem Entladungsvolumen getrennt sind und zur Erzeugung dielektrisch behindernder Entladung ausgelegt sind, wobei zumindest ein Teil der streifenförmigen Elektroden Entladungselektrodenabschnitte aufweisen, die zu jeweils benachbarten Elektroden nächstbenachbart und dazu ausgelegt sind, dass an ihnen Einzelentladungen brennen, dadurch gekennzeichnet, dass die Entladungselektrodenabschnitte gegenüber anschließenden benachbarten Abschnitten des jeweils selben Elektrodenstreifens überhängen, in der Art, dass sie neben diesen Abschnitten und beabstandet davon verlaufen, und die Elektrodenstreifen in einer von dem jeweiligen Entladungselektrodenabschnitt kommenden Perspektive am Rand des Entladungselektrodenabschnitts hinterschnitten sind.

Ferner richtet sich die Erfindung auch auf ein Beleuchtungssystem aus einer solchen Entladungslampe und einem zugehörigen elektronischen Vorschaltgerät sowie auf ein Betriebsverfahren zum Betreiben der Entladungslampe bzw. des Beleuchtungssystems.

Bevorzugte Ausgestaltungen der Erfindung sind in den abhängigen Ansprüchen und in der folgenden Beschreibung dargestellt. Die Offenbarung in der Beschreibung bezieht sich dabei sowohl auf den Vorrichtungs- als auch auf den Verfahrenscharakter der Erfindung und ist in ihren jeweiligen Einzelmerkmalen in beiderlei Hinsicht zu verstehen.

Bei der erfindungsgemäßen Entladungslampe werden die zu dem jeweils benachbarten Elektrodenstreifen nächstbenachbarten Abschnitte eines Elektredenstreifens als Entladungselektrodenabschnitt bezeichnet. Die Entladungselektrodenabschnitte sind also die Abschnitte eines Elektrodenstreifens, an denen im Betrieb Einzelentladungen brennen. Dabei können entlang eines Elektrodenstreifens auch unterschiedlichen benachbarten Elektrodenstreifen zugeordnete Entladungselektrodenabschnitte auftreten. In der erwähnten Voranmeldung entsprechen die Entladungselektrodenabschnitte also beispielsweise den Maxima und Minima bzw. den Spitzen der Sinus- und Sägezahnwellenform.

Bei dieser Erfindung sollen die Entladungselektrodenabschnitte so ausgestaltet sein, dass sie gegenüber benachbarten Abschnitten desselben Elektrodenstreifens, also den an den jeweiligen Entladungselektrodenabschnitt angrenzenden Elektrodenstreifenabschnitten, überhängen. Die Elektrodenstreifen sollen in einer von dem jeweiligen Entladungselektrodenabschnitt kommenden Perspektive am Rand des Entladungselektrodenabschnitts hinterschnitten sein. Dabei sollen bevorzugt die Entladungselektrodenabschnitte an der überhängenden Stelle von dem benachbarten der anderen Elektrodenstreifen zurückspringen, sich also von diesem entfernen.

Wenn man sich als Beispiel, analog zu der Beschreibung der konventionellen Elektrodenform aus der zitierten Voranmeldung als Sinuswellen, einen erfindungsgemäßen Elektrodenstreifen in einem Koordinatensystem aufgetragen denkt, wobei die Abszisse der Hauptstreifenrichtung entspricht, so sollen in einem Randbereich der Entladungselektrodenabschnitte einem Abszissenwert zumindest zwei Ordinatenwerte zuzuordnen sein und nicht, wie in der Umgebung der Maximal- und Minimalbereiche der Sinuswelle jeweils nur ein Ordinatenwert. Zur Veranschaulichung wird auf die Ausführungsbeispiele verwiesen.

Durch die Auszeichnung der Entladungselektrodenabschnitte als diejenigen Elektrodenabschnitte, die zu den jeweils benachbarten Elektrodenstreifen nächstbenachbart sind, ergibt sich, dass auch bei dieser Erfindung ein modulierter Entladungsabstand gegeben ist. Jedoch hat die überhängende Form gemäß der vorstehenden Erläuterungen die Konsequenz, dass sich zwischen dem Entladungselektrodenabschnitt und anderen Entladungselektrodenabschnitten desselben Elektrodenstreifens für den Stromfluss verlängerte Bahnstrecken des Elektrodenstreifens ergeben. Es hat sich gezeigt, dass dies günstige Eigenschaften auf die Ausbildung der Einzelentladungen hat. Insbesondere finden offenbar in geringerem Umfang Ladungsträger-Austauschprozesse statt. Dies erlaubt zum einen einen breiteren Auswahlbereich für die Lampenleistung und erlaubt zum anderen, wenn gewünscht, eine dichtere Anordnung der Einzelentladungen.

Auf diese Weise lassen sich durch entsprechende Abstände zwischen den Entladungselektrodenabschnitten und den übrigen Elektrodenbahnen geringe Kapazitäten zwischen den Elektroden realisieren. Dies hat Vorteile für die Auslegung von Vorschaltgeräten.

Vorzugsweise trifft die gegebene Erläuterung auf sämtliche Elektrodenstreifen in der Entladungslampe zu. Im Grunde ist dies jedoch nicht unbedingt notwendig, beispielsweise könnten erfindungsgemäß ausgestalteten Elektrodenstreifen jeweils einfache gerade Elektrodenstreifen als Nachbarn zugeordnet sein. lm Fall einer Entladungslampe, bei der sich durch eine unterschiedliche Ausbildung oder auch nur durch eine entsprechende Polaritätszuordnung bezüglich der elektrischen Anschlüsse zwischen Kathoden und Anoden unterscheiden lässt, die also für einen unipolaren Betrieb ausgelegt ist, ist es bevorzugt, dass zumindest die Anoden erfindungsgemäß ausgestaltet sind.

Weiterhin ist bevorzugt, dass die beschriebenen Entladungselektrodenabschnitte jeweils an beiden Randbereichen, also sozusagen nach links und nach rechts, in der beschriebenen Weise überhängen. Die Erfindung ist jedoch auch bereits dann gegeben, wenn die überhängende Struktur nach nur einer Seite gegeben ist.

Insbesondere kann gemäß einer Ausgestaltung eine T-Form oder eine sehr ähnliche Form mit beispielsweise konvexem Dach des T vorgesehen sein, wobei sich der Begriff konvex auf die Perspektive des dem Entladungselektrodenabschnitt zugeordneten benachbarten Elektrodenstreifens bezieht.

Überhaupt ist es, unabhängig von der T-Form, bevorzugt, dass der Entladungselektrodenabschnitt selbst aus der Perspektive des benachbarten Elektrodenstreifens konvex oder gerade, also nicht konkav ist.

Nach einer weiteren bevorzugten Ausgestaltung sind die Elektrodenstreifen verzweigt, wobei auf jeden Entladungselektrodenabschnitt zumindest ein Verzweigungspunkt kommt. Unter Verzweigungspunkt wird hier ein Punkt des Elektrodenstreifens verstanden, von dem aus der Elektrodenstreifen in mehr als zwei Richtungen weiterläuft. Die Verbindung zwischen dem aufrechten und dem oberen querliegenden Strich des T ist ein Beispiel, der Anschlusspunkt der Basis des T an einem in Hauptstreifenrichtung laufenden und im Wesentlichen senkrecht zu dieser Basis daran angeschlossenen E-lektrodenleitungsabschnitt ein anderes. Mit verzweigten Strukturen lassen sich die Entladungselektrodenabschnitte über einen oder auch mehr als einen Anschlussabschnitt an einen Leitungsabschnitt des Elektrodenstreifens anschließen, wobei sich an zumindest einer Seite neben dem Anschlussabschnitt die beschriebenen überhängende Struktur ergibt. Die Hauptleitungsabschnitte zwischen den Anschlussabschnitten und Entladungselektrodenabschnitten sind vorzugsweise im Wesentlichen gerade, wie die Ausführungsbeispiele verdeutlichen.

Vorzugsweise weist die Entladungslampe eine Vielzahl Elektroden auf, die einzelstreifenweise alternierend angeordnet sind, also polaritätsabwechselnd liegen. Im unipolaren Fall bedeutet das, dass auf eine Kathode immer eine Anode und umgekehrt folgt. Im bipolaren Fall gilt dies für die jeweils unipolaren Halbperioden.

Ferner sind die einzelnen Elektrodenstreifen vorzugsweise so ausgestaltet, dass die Einzelentladungen entlang einer Haupstreifenrichtung beidseits alternierend liegen, was, wenn der jeweilige Elektrodenstreifen für die Einzelentladungen zu beiden Seiten Entladungselektrodenabschnitte im Sinn der Erfindung vorsieht, dann auch für diese Entladungselektrodenabschnitte gilt.

Eine bevorzugte Anwendung der Erfindung liegt im Bereich der Flachstrahler, wie sie im Zusammenhang mit dielektrisch behinderten Entladungen bereits bekannt sind. Solche Flachstrahler können insbesondere zur Hinterleuchtung von Displays und ähnlichen großflächigen Anzeigen Verwendung finden. Sie weisen eine große Zahl in der Fläche des Flachstrahlers verteilte Elektrodenstreifen auf.

Ein erfindungsgemäßes Beleuchtungssystem verfügt neben der Entladungslampe auch über ein zugeordnetes elektronisches Vorschaltgerät, das für einen gepulsten Betrieb der Entladungslampe ausgelegt ist. Vorzugsweise ist dieses Vorschaltgerät so ausgestattet, dass es ein Dimmen der Entladungslampe erlaubt, wofür sich die erfindungsgemäße Elektrodenstruktur in besonderer Weise anbietet.

### Kurze Beschreibung der Zeichnungen

- Fig. 1: zeigt eine, schematisierte Draufsicht auf eine erfindungsgemäße Elektrodenstruktur einer Entladungslampe.
- Fig. 2: zeigt einen Ausschnitt aus einer weiteren Elektrodenstruktur als zweites Ausführungsbeispiel.
- Fig. 3: zeigt einen weiterer Ausschnitt als drittes Ausführungsbeispiel.
- Fig. 4: zeigt einen weiteren Ausschnitt als viertes Ausführungsbeispiel.
- Fig. 5: zeigt noch einen weiteren Ausschnitt als fünftes Ausführungsbeispiel.

### Bevorzugte Ausführung der Erfindung

Im Folgenden wird die Erfindung anhand einer Zahl von Ausführungsbeispielen näher verdeutlicht, die in den Figuren veranschaulicht sind. Dabei offenbarte Einzelmerkmale können auch in anderen Kombinationen erfindungswesentlich sein.

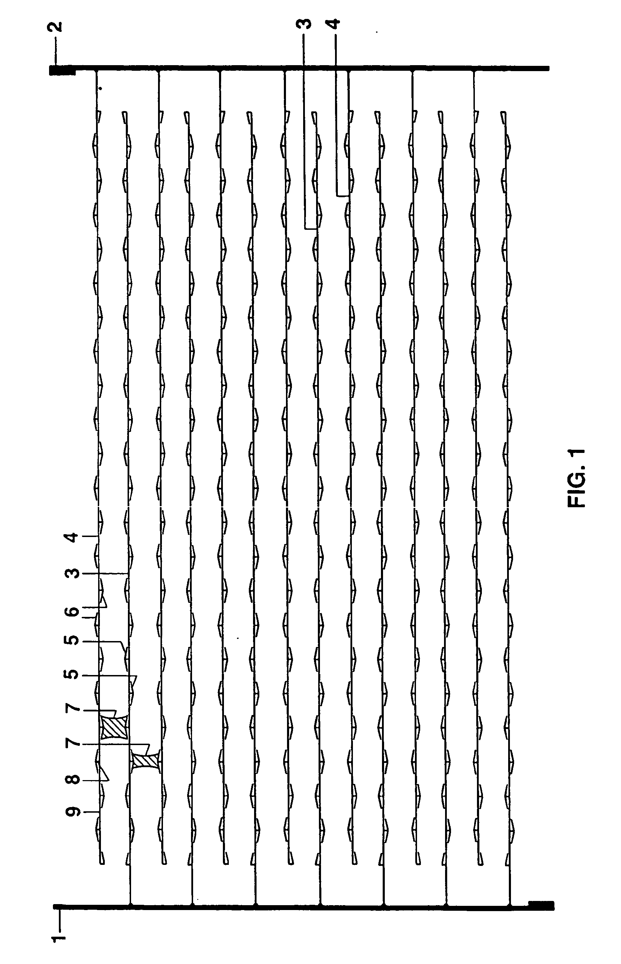

Fig. 1 zeigt eine Draufsicht auf einen Teil einer Elektrodenstruktur einer erfindungsgemäßen Entladungslampe. Rechts und links in Fig. 1 sind mit 1 und 2 gemeinsame Anschlussbereiche jeweiliger Elektrodenstreifen 3 und 4 bezeichnet. Die Elektrodenstreifen 3 und 4 beginnen jeweils an ihren Anschlüssen 1 bzw. 2 und bilden mit den Anschlüssen eine kammähnliche Struktur. Dabei sind die Elektrodenstreifen 3 und 4 alternierend angeordnet, so dass sich gewissermaßen eine verschachtelte Struktur zweier mit den Zinken ineinander gelegter Kammstrukturen ergibt. Zwischen jeweils benachbarten Elektrodenstreifen 3 und 4 sollen im Betrieb der Entladungslampe dielektrisch behinderte Entladungen brennen. Im vorliegenden Fall sind die Anschlüsse 1 und 2 sowie die Elektrodenstreifen 3 und 4 spiegelbildlich identisch und sämtlich mit einer dielektrischen Schicht bedeckt. Bei diesem Ausführungsbeispiel wird also nicht zwischen Anoden und Kathoden unterschieden und damit auch ein bipolarer Betrieb ermöglicht. Die Elektrodenstreifen 3 und 4 sind also alternierend in der Kathodenrolle und in der Anodenrolle.

Man erkennt weiterhin, dass die Elektrodenstreifen 3 und 4 jeweils entlang ihrer in Fig. 1 waagrecht laufenden Hauptstreifenrichtung alternierend zu beiden Seiten (also in Fig. 1 nach oben und unten) angeordnete Entladungselektrodenabschnitte 5 bzw. 6 aufweisen. Die Hauptstreifenrichtung ergibt sich letztlich ungefähr als Mittelwert über die gesamte Länge eines Elektrodenstreifens. Die Entladungselektrodenabschnitte 5 gehören zu den Elektrodenstreifen 3 und sind abwechselnd nach oben und unten gerichtet. Entsprechendes gilt für die Entladungselektrodenabschnitte 6 und die Elektrodenstreifen 4.

Dabei liegen sich zwischen benachbarten Elektrodenstreifen 3 und 4 jeweils Entladungselektrodenabschnitte 5 und 6 nächstbenachbart gegenüber. Zwischen diesen nächstbenachbarten Entladungselektrodenabschnitten 5 und 6 ergeben sich die kleinsten auftretenden Abstände zwischen den Elektrodenstreifen 3 und 4. Die Entladungselektrodenabschnitte 5 und 6 modulieren also den Entladungsabstand zwischen den Elektrodenstreifen 3 und 4 und zeichnen damit den Bereich jeweils zwischen nächstbenachbarten Entladungselektrodenabschnitten 5 und 6 als Vorzugsplatz für Einzelentladungen aus. Zwischen den in Fig. 1 obersten drei Elektrodenstreifen 3 und 4 sind beispielhaft zwei Einzelentladungen 7 eingezeichnet, die im Betrieb der Lampe zwischen sämtlichen nächstbenachbarten Entladungselektrodenabschnitten 5 und 6 in einer solchen oder ähnlichen Form brennen würden. In Folge der Bipolarität überlagern sich hierbei zwei für die jeweiligen Polaritäten typische dreiecksähnliche Einzelentladungen zu einer insgesamt etwas taillierten Form. In Fig. 1 sind die beiden Einzelentladungsstrukturen 7 zur Veranschaulichung so gezeichnet, dass sie unterschiedlichen Leistungsstufen entsprechen und dementsprechend unterschiedliche Breiten der Entladungselektrodenabschnitte 5 und 6 einnehmen.

Jeder einzelne Entladungselektrodenabschnitt 5 oder 6 hat eine T-ähnliche Form mit einem relativ zu dem aufrechten "Stamm" 8 des T breiten Dach, das im Unterschied zu dem Buchstaben "T" an beiden Seiten etwas nach unten geknickt ist. Aus der Perspektive des nächstbenachbarten Entladungselektrodenabschnitts sind die Entladungselektrodenabschnitte also jeweils etwas eckig konvex mit einer an dem Verzweigungspunkt zwischen dem "Stamm" 8 des T und dem "Dach" des T liegenden Spitze.

Die Einzelentladungen 7 brennen je nach Leistung der Entladungslampe zwischen einem mittleren Bereich der Entladungselektrodenabschnitte 5 und 6 in der Umgebung der Spitze oder über die gesamte Breite des jeweiligen "Daches", wie in Fig. 1 eingezeichnet. Die Kopplung zwischen Einzelentladungen 7 über die Elektrodenstreifen erfolgt dabei also über die dachartigen Abschnitte der Entladungselektrodenabschnitte 5 und 6, den jeweiligen "Stamm", also den Anschlussabschnitt 8 zu den in Fig. 1 gerade und waagrecht durchlaufenden Hauptleitungsabschnitten 9 und das jeweilige Stück Hauptleitungsabschnitt 9 bis zum nächsten Entladungselektrodenabschnitt 5, 6 sowie dort wiederum über den Anschlussabschnitt 8 des T und das "Dach" der T-Form.

Die hier dargestellte Elektrodenstruktur weist also Entladungselektrodenabschnitte 5, 6 auf, die mit den jeweiligen Hälften des "T-Daches" gegenüber den Anschlussabschnitten 8 überhängen. Dabei weist der übrige Elektrodenstreifen 3, 4 im Anschluss an den jeweiligen Entladungselektrodenabschnitt 5 oder 6, also der jeweilige Leitungsabschnitt 9, gegenüber dem nächstbenachbarten der anderen Elektrodenstreifen einen größeren Abstand auf. Damit soll die dargestellte Geometrie unterschieden werden von einem Fall, in dem das Überhängen beispielsweise in einer auf der Zeichenebene der Fig. 1 senkrechten dritten Dimension erfolgt.

Man kann sich anhand der Fig. 1 auch veranschaulichen, dass die jeweiligen T-förmigen Entladungselektrodenabschnitte 5 und 6 zwischen dem "T-Dach" und den Leitungsabschnitten 9 nach beiden Seiten, also in Fig. 1 nach rechts und nach links, einen Hinterschnitt bilden.

Im Unterschied zu der erwähnten konventionellen Sinusform sind dabei die Entladungselektrodenabschnitte 5, 6 nicht an ihren jeweiligen rechten und linken Enden mit den Leitungsabschnitten 9 verbunden sondern mittig über den Anschlussabschnitt 8, an dem sowohl im Übergang zu dem "T-Dach" als auch im Übergang zu den Leitungsabschnitten 9 Verzweigungspunkte auftreten. Von diesen Verzweigungspunkten läuft der Elektrodenstreifen jeweils in drei Richtungen weiter.

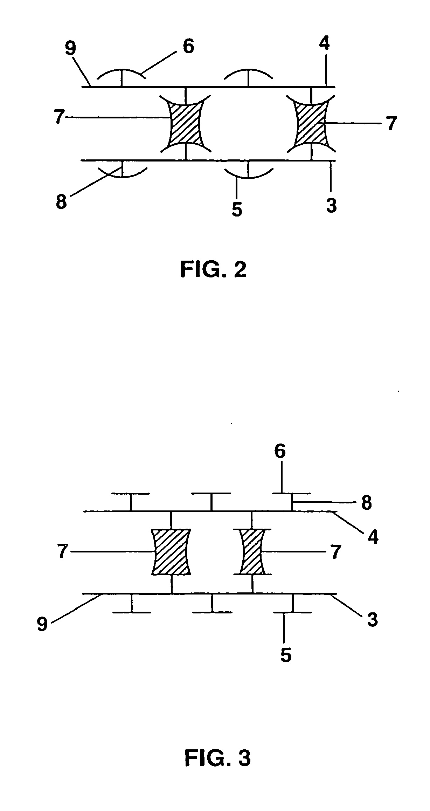

Insgesamt handelt es sich dabei in Fig. 1 um die Elektrodenstruktur eines Flachstrahlers zur Hinterleuchtung eines Monitors. Der eigentliche Flachstrahler kann eine schematisch Fig. 1 entsprechende jedoch weitaus größere Elektrodenstruktur aufweisen. Er kann im Übrigen mit einem dimmbaren elektronischen Vorschaltgerät versehen sein. Die hier dargestellten Elektrodenstrukturen eignen sich für eine Dimmfunktion in besonderer Weise. Zu den Einzelheiten der Dimmfunktion wird der Einfachheit halber jedoch auf die eigene frühere Patentanmeldung DE 198 45 228.4 und die zugehörige WO 00/21116 verwiesen. Insbesondere eigneten sich die hier für beide E-lektrodengruppen vorgesehenen Entladungsstrukturen auch für die Verwendung bei nur einer Elektrodengruppe, können also in der Fig. 2 der zuletzt in Bezug genommen Anmeldung an die Stelle der dortigen sinusförmigen Elektrodenstreifen treten. Im Übrigen gelten die dortigen Ausführungen zum Dimmbetrieb analog für den vorliegenden Fall. Zur Verdeutlichung der Technologie von dielektrisch behinderten Entladungslampen und insbesondere Flachstrahlern wird im Übrigen auf die in den beiden in Bezug genommenen Anmeldungen enthaltenen Zitate verwiesen.

Fig. 2 zeigt eine Alternative zu Fig. 1, wobei der Einfachheit halber jedoch nur ein kleiner Ausschnitt dargestellt ist. Es werden die gleichen Bezugsziffern verwendet, um sich entsprechende Elemente zu bezeichnen. Der Unterschied zu Fig. 1 besteht lediglich darin, dass die "Dächer" der T-förmigen Entladungselektrodenabschnitte 5 und 6 hier rundlich konvex sind, und zwar Ausschnitte aus einer gedachten jeweiligen Sinuswelle bilden. Die hier dargestellte Elektrodenstruktur entspricht also hinsichtlich der Entladungselektrodenabschnitte 5, 6 den konventionellen Sinuselektrodenstreifen, ist jedoch nur abschnittsweise sinusförmig. (Entsprechend könnte man sich eine Struktur gemäß Fig. 1 auch als abschnittsweise sägezahnförmig vorstellen.)

Fig. 3 zeigt eine weitere Alternative, bei der die "Dächer" der T-förmigen Entladungselektrodenabschnitte 5 und 6 gerade und dabei parallel zur Hauptstreifenrichtung der jeweiligen Elektrodenstreifen 3 und 4 sind. Diese Struktur entspricht also abschnittsweise einer Rechteckwellenfunktion. Zur Veranschaulichung sind hier entsprechend Fig. 1 unterschiedlich breit ausgebildete und damit unterschiedlichen Leistungsstufen entsprechende Einzelentladungen 7 eingezeichnet. Es versteht sich von selbst, dass die unterschiedlich großen Einzelentladungen 7 aus den Fig. 1 und 3 bei den hier dargestellten Strukturen nicht gleichzeitig sondern nur alternativ, dann aber zwischen sämtlichen Entladungselektrodenabschnitten 5 und 6, auftreten.

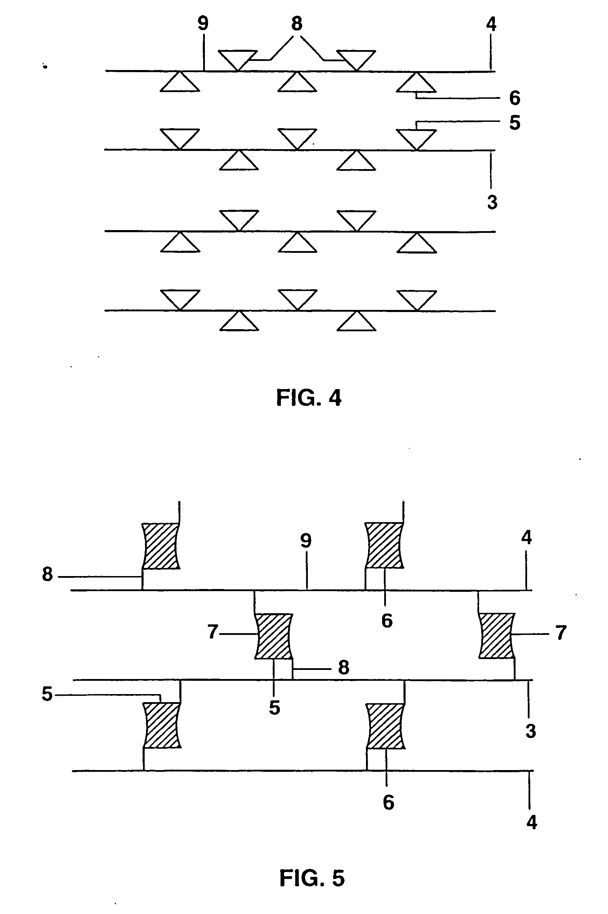

Fig. 4 zeigt eine weitere Alternative, hier jedoch mit nur einem Verzweigungspunkt pro Entladungselektrodenabschnitt 5 bzw. 6. lm Unterschied zu den Strukturen aus den Fig. 1 - 3 treten bei der Struktur aus Fig. 4 nämlich jeweils zwei Anschlussabschnitte 8 auf, die zusammen mit dem jeweiligen "Dach" ein mit einer Seitenkante dem nächstbenachbarten Entladungselektrodenabschnitt zugewandtes Dreieck bilden. Man erkennt, dass auch diese Entladungsstrukturen im Sinne der vorstehenden Erläuterungen zurückspringend überhängen und einen Hinterschnitt bilden.

Fig. 5 zeigt eine letzte Alternative, die weitgehend Fig. 3 entspricht, jeweils jedoch nur zu einer Seite ein "Dach" aufweist. Dementsprechend sind die Anschlussabschnitte 8 an benachbarten Entladungselektrodenabschnitten 5 und 6 so gegeneinander versetzt, dass sich die nun einseitigen "Dächer" direkt gegenüber liegen. Diese Variante verdeutlicht, dass die vorstehenden Aussagen zu dem Überhängen und dem Hinterschnitt nur zu einer Seite auftreten müssen.

## Patentansprüche

1. Entladungslampe mit einem ein Entladungsvolumen begrenzenden Entladungsgefäß und
einer Mehrzahl streifenförmiger Elektroden (3, 4), die zumindest zum Teil durch eine dielektrische Schicht von dem Entladungsvolumen getrennt sind und zur Erzeugung dielektrisch behindernder Entladung ausgelegt sind,
wobei zumindest ein Teil der streifenförmigen Elektroden (3, 4) Entladungselektrodenabschnitte (5, 6) aufweisen, die zu jeweils benachbarten Elektroden (4, 3) nächstbenachbart und dazu ausgelegt sind, dass an ihnen Einzelentladungen (7) brennen,
**dadurch gekennzeichnet, dass** die Entladungselektrodenabschnitte (5, 6) gegenüber anschließenden benachbarten Abschnitten (9) des jeweils selben Elektrodenstreifens (3, 4) überhängen, in der Art, dass sie neben diesen Abschnitten (9) und beabstandet davon verlaufen, und die Elektrodenstreifen (3, 4) in einer von dem jeweiligen Entladungselektrodenabschnitt (5, 6) kommenden Perspektive am Rand des Entladungselektrodenabschnitts (5, 6) hinterschnitten sind.

2. Entladungslampe nach Anspruch 1, bei der sämtliche Elektrodenstreifen (3, 4) Entladungselektrodenabschnitte (5, 6) nach Anspruch 1 aufweisen und die Entladungselektrodenabschnitte (5, 6) jeweils gegenüber den benachbarten Abschnitten (9) von dem jeweils nächstbenachbarten Elektrodenstreifen (4, 3) zurückspringend überhängen.

3. Entladungslampe nach Anspruch 1 oder 2, bei der die Entladungselektrodenabschnitte (5, 6) nach jeweils zwei Seiten gemäß Anspruch 1 überhängen.

4. Entladungslampe nach Anspruch 3, bei der die Entladungselektrodenabschnitte (5, 6) im Wesentlichen T-förmig sind.

5. Entladungslampe nach einem der vorstehenden Ansprüche, bei der die Entladungselektrodenabschnitte (5, 6) von den nächstbenachbarten Elektrodenstreifen (4, 3) aus gesehen konvex oder gerade sind.

6. Entladungslampe nach einem der vorstehenden Ansprüche, bei der die Elektrodenstreifen (3, 4) mit den Entladungselektrodenabschnitten (5, 6) verzweigt sind und auf jeden Entladungselektrodenabschnitt (5, 6) zumindest ein Verzweigungspunkt kommt.

7. Entladungslampe nach einem der vorstehenden Ansprüche, bei der die streifenförmige Elektroden (3, 4) mit den Entladungselektrodenabschnitten (5, 6) zwischen den Entladungselektrodenabschnitten (5, 6) im Wesentlichen gerade Hauptleitungsabschnitte (9) aufweisen.

8. Entladungslampe nach einem der vorstehenden Ansprüche mit einer Mehrzahl Elektrodenstreifen, die mit im Wesentlichen parallelen Hauptstreifenrichtungen in ihrer Polarität alternierend angeordnet sind.

9. Entladungslampe nach einem der vorstehenden Ansprüche, bei der entlang einer jeweiligen Hauptstreifenrichtung der Elektrodenstreifen (3, 4) mit den Entladungselektrodenabschnitten (5, 6) die Entladungselektrodenabschnitte (5, 6) beidseits alternierend liegen.

10. Entladungslampe nach einem der vorstehenden Ansprüche, die als Flachstrahler mit im Wesentlichen flachem Entladungsgefäß und einer Vielzahl Elektrodenstreifen (3, 4) ausgelegt ist, die über die Fläche des Entladungsgefäßes verteilt sind.

11. Beleuchtungssystem aus einer Entladungslampe nach einem der vorstehenden Ansprüche und einem elektronischen Vorschaltgerät zum Betrieb der Entladungslampe, welches Vorschaltgerät für eine gepulste Leistungseinkopplung in die Entladungslampe ausgelegt ist.

12. Beleuchtungssystem nach Anspruch 11, bei dem das Vorschaltgerät einen wahlweisen Betrieb der Entladungslampe in verschiedenen Leistungsstufen erlaubt.

13. Verfahren zum Betreiben einer Entladungslampe nach einem der Ansprüche 1 - 10 oder eines Beleuchtungssystems nach Anspruch 11 oder 12, bei dem die Entladungslampe so betrieben wird, dass an den Entladungselektrodenabschnitten (5, 6) jeweils zumindest eine Einzelentladung (7) brennt.

14. Verfahren nach Anspruch 13, bei dem die Entladungslampe gedimmt wird.

## Claims

1. Discharge lamp having a discharge vessel which bounds a discharge volume, and
having two or more electrodes (3, 4), which are in the form of strips and are at least partially separated by a dielectric layer from the discharge volume, and are designed to produce a dielectric barrier discharge,
with at least some of the electrodes (3, 4) which are in the form of strips having discharge electrode sections (5, 6) which are most closely adjacent to respectively adjacent electrodes (4, 3) and are designed such that individual discharges (7) burn on them,
**characterized in that** the discharge electrode sections (5, 6) overhang adjacent sections (9) of the respective same electrode strip (3, 4), in such a way that they run alongside these sections (9) and at a distance from them, and the electrode strips (3, 4) are undercut at the edge of the discharge electrode section (5, 6) in a perspective from the respective discharge electrode section (5, 6).

2. Discharge lamp according to Claim 1, in which all the electrode strips (3, 4) have discharge electrode sections (5, 6), and the discharge electrode sections (5, 6) each overhang the adjacent sections (9) of the respectively most closely adjacent electrode strips (4, 3) such that they jump back.

3. Discharge lamp according to Claim 1 or 2, in which the discharge electrode sections (5, 6) each overhang on two sides as claimed in Claim 1.

4. Discharge lamp according to Claim 3, in which the discharge electrode sections (5, 6) are essentially T-shaped.

5. Discharge lamp according to one of the preceding claims, in which the discharge electrode sections (5, 6) are convex or straight when seen from the most closely adjacent electrode strips (4, 3).

6. Discharge lamp according to one of the preceding claims, in which the electrode strips (3, 4) have discharge electrode sections (5, 6) branching off them, and there is at least one branching point to each discharge electrode section (5, 6).

7. Discharge lamp according to one of the preceding claims, in which the electrodes (3, 4) which are in the form of strips and have discharge electrode sections (5, 6), have main line sections (9) which are essentially straight between the discharge electrode sections (5, 6).

8. Discharge lamp according to one of the preceding claims, having two or more electrode strips, which are arranged with alternating polarity and with essentially parallel main strip directions.

9. Discharge lamp according to one of the preceding claims, in which the discharge electrode sections (5, 6) lie on both sides alternately along a respective main strip direction of the electrode strips (3, 4) with the discharge electrode section (5, 6).

10. Discharge lamp according to one of the preceding claims, which is in the form of a flat radiating element with an essentially flat discharge vessel and a large number of electrode strips (3, 4) which are distributed over the surface of the discharge vessel.

11. Lighting system comprising a discharge lamp according to one of the preceding claims and an electronic ballast for operation of the discharge lamp, which ballast is designed to input power in a pulsed manner into the discharge lamp.

12. Lighting system according to Claim 11, in which the ballast allows the discharge lamp to be operated selectively at different power levels.

13. Method for operation of a discharge lamp according to one of Claims 1-10 or of a lighting system according to Claim 11 or 12, in which the discharge lamp is operated such that at least one individual discharge (7) burns on each of the discharge electrode sections (5, 6).

14. Method according to Claim 13, in which the discharge lamp is dimmed.

## Revendications

1. Lampe à décharge comportant
une enceinte de décharge qui délimite un espace de décharge et une multiplicité d'électrodes (3, 4) en bande, qui sont au moins en partie séparées de l'espace de décharge par une couche diélectrique et sont conçues pour produire une décharge à effet de barrière diélectrique,
au moins une partie des électrodes (3, 4) en bande comporte des segments d'électrode de décharge (5, 6) situés le plus près possible des électrodes (4, 3) respectivement voisines et conçus pour que des décharges individuelles (7)y jaillissent,
**caractérisée en ce que** les segments d'électrode de décharge (5, 6) surplombent les segments (9) voisins contigus de la même bande d'électrodes (3, 4) de telle manière qu'ils s'étendent à côté de ces segments (9) et à distance d'eux et que les bandes d'électrodes (3, 4) sont contre-dépouillées au bord du segment d'électrode de décharge (5, 6) dans une perspective qui part du segment d'électrode de décharge (5, 6) en question.

2. Lampe à décharge selon la revendication 1, dans laquelle toutes les bandes d'électrodes (3, 4) comportent des segments d'électrode de décharge (5, 6) d'après la revendication 1 et les segments d'électrode de décharge (5, 6) surplombent en s'en écartant les segments (9) respectivement voisins de la bande d'électrodes (3, 4) respectivement la plus proche.

3. Lampe à décharge selon la revendication 1 ou 2, dans laquelle les segments d'électrode de décharge (5, 6) sont en surplomb de chacun des deux côtés selon la revendication 1.

4. Lampe à décharge selon la revendication 3, dans laquelle les segments d'électrode de décharge (5, 6) ont pratiquement la forme d'un T.

5. Lampe à décharge selon l'une des revendications précédentes, dans laquelle les segments d'électrode de décharge (5, 6) sont convexes ou rectilignes quand on les regarde à partir des bandes d'électrodes (4, 3) les plus proches.

6. Lampe à décharge selon l'une des revendications précédentes, dans laquelle les bandes d'électrodes (4, 3) munies des segments d'électrode de décharge (5, 6) sont ramifiées et qu'il y a au moins un point de ramification sur chaque segment d'électrode de décharge (5, 6).

7. Lampe à décharge selon l'une des revendications précédentes, dans laquelle les électrodes en bande (3, 4) munies des segments d'électrode de décharge (5, 6) ont, entre les segments d'électrode de décharge (5, 6), des segments de conduction principale (9) pratiquement rectilignes.

8. Lampe à décharge selon l'une des revendications précédentes, comportant un grand nombre de bandes d'électrodes dont la polarité est alternée dans les directions pratiquement parallèles des bandes principales.

9. Lampe à décharge selon l'une des revendications précédentes, dans laquelle les segments d'électrode de décharge (5, 6) sont placés alternativement de chaque côté, le long de chaque direction de bande principale sur les bandes d'électrodes (3, 4) munies des segments d'électrode de décharge (5, 6).

10. Lampe à décharge selon l'une des revendications précédentes, dans laquelle elle consiste en une source de rayonnement plate comportant une enceinte de décharge sensiblement plate et une pluralité de bandes d'électrodes (3, 4) réparties sur la surface de l'enceinte de décharge.

11. Système d'éclairage formé d'une lampe à décharge selon l'une des revendications précédentes et d'un ballast électronique pour faire fonctionner la lampe à décharge, le ballast étant conçu pour une injection pulsée de puissance dans la lampe à décharge.

12. Système d'éclairage selon la revendication 11, dans lequel le ballast permet de faire fonctionner à volonté la lampe à décharge dans différents échelons de puissance.

13. Procédé pour faire fonctionner une lampe à décharge selon l'une des revendications 1 à 10 ou un système d'éclairage selon les revendications 11 ou 12, d'après lequel la lampe à décharge fonctionne de telle manière qu'au moins une décharge particulière (7) jaillisse respectivement sur les segments d'électrode de décharge (5, 6).

14. Procédé selon la revendication 13, d'après lequel la lampe à décharge a une intensité variable.
